(19) Europäisches Patentamt
European Patent Office
Office européen des brevets

(11) EP 2 339 570 B1

(12) **EUROPEAN PATENT SPECIFICATION**

(45) Date of publication and mention of the grant of the patent:
**19.06.2013 Bulletin 2013/25**

(51) Int Cl.:
***G09G 3/36*** *(2006.01)* ***G09G 3/34*** *(2006.01)*
*G09G 3/20* *(2006.01)*

(21) Application number: **10251924.6**

(22) Date of filing: **12.11.2010**

(54) **Liquid crystal display with RGBW pixels and dynamic backlight control**

Flüssigkristallanzeige mit RGBW-Pixeln und dynamischer Hintergrundbeleuchtungssteuerung

Affichage à cristaux liquides avec pixels RGBW doté d'un contrôle dynamique du rétroéclairage

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.11.2009 KR 20090109021**

(43) Date of publication of application:
**29.06.2011 Bulletin 2011/26**

(73) Proprietor: **Samsung Display Co., Ltd.**
**Gyeonggi-Do (KR)**

(72) Inventor: **Park, Jong-Woong**
**Chungcheongnam-do (KR)**

(74) Representative: **Taor, Simon Edward William**
**Marks & Clerk LLP**
**90 Long Acre**
**London**
**WC2E 9RA (GB)**

(56) References cited:
**WO-A1-2008/035259**
**US-A1- 2006 244 686**
**US-A1- 2007 024 557**
**US-A1- 2007 279 372**
**US-A1- 2009 009 495**
**US-A1- 2009 122 073**
**US-A1- 2009 207 120**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 339 570 B1

## Description

## BACKGROUND OF THE INVENTION

### 1. Field of the Invention

An embodiment of the present invention relates to a liquid crystal display (LCD), and more particularly, to a liquid crystal display (LCD) for performing dynamic backlight control for a pixel structure in an RGBW method and a method of driving the same.

### 2. Description of the Related Art

In general, a liquid crystal display (LCD) includes a liquid crystal display panel including a plurality of scan lines and a plurality of data lines, a gate driving circuit supplying gate driving signals to the plurality of scan lines, and a data driving circuit for supplying data signals to the plurality of data lines. The liquid crystal display panel includes a lower substrate on which a pixel electrode is formed, an upper substrate on which a common electrode is formed, and a liquid crystal layer inserted between the lower substrate and the upper substrate and applies a voltage to the electrodes to re-arrange the liquid crystal molecules of the liquid crystal layer and to control the transmittance of the light that passes through the liquid crystal layer. Red (R), green (G), and blue (B) pixels are formed in the liquid crystal panel and the pixels are driven by the signals applied to the scan lines and the data lines so that a display operation is performed.

As the resolution of the LCD increases, the aperture ratio of the liquid crystal panel is reduced so that its brightness deteriorates. In order to solve this problem, a pixel structure in a Pentile method is provided. In the pixel structure of the Pentile method, the blue unit pixel is shared when two dots are displayed. The data signals are transmitted to adjacent blue unit pixels by one data driving circuit, and the adjacent blue unit pixels are driven by different gate driving circuits. In addition, in order to improve brightness, the RGBW method in which a white (W) pixel is added to the red (R), green (G), and blue (B) pixels is provided.

Furthermore, in controlling the backlight included in the LCD, in order to reduce power consumption and to improve picture quality, a dynamic backlight control function is used.

US2007279372 discloses a display system that comprises: a transmissive display, a transmissive display controller, said display controller providing signals to said transmissive display to set the amount of transmissivity of each said colored subpixel; a backlight, said backlight providing illumination to said transmissive display; a backlight controller, said controller providing signals to said backlight to modulate the amount of illumination provided by said backlight to said transmissive display.

US2006255686 discloses an LCD with R, G, B and W pixels that are arranged alternately as RGBW and BWRG in subsequent rows, wherein a conversion from RGB data to RGBW data takes place, but without any corresponding control of the backlight.

US2009207120 discloses just an LCD with an interface for receving data in RGB mode and also in other different modes (CPU mode, WIPI serial mode etc.).

## SUMMARY

Various embodiments of the present invention are directed to a liquid crystal displays (LCDs) capable of converting input RGB data into RGBW data to provide the RGBW data to a panel, and controlling the light level of a backlight and the amount of the RGBW data to prevent RGBW picture quality from being deteriorated in pure color data, of minimizing the power consumption of the LCD, and of applying the above to a CPU interface method as well as an RGB interface method and a method of driving the same.

The present invention is directed to a liquid crystal display (LCD) driven by a CPU interface method. The LCD includes a liquid crystal panel having a plurality of R, G, B, and W pixels located between a plurality of scan lines and data lines arranged in a matrix, a backlight unit for radiating light onto the liquid crystal panel, a data driver for applying data signals to the plurality of data lines, an image signal converter for converting RGB data input from the outside into RGBW data to provide the RGBW data to the data driver, and a dynamic backlight controller for controlling an amount of light emitted from the backlight unit to correspond to data applied to the RGBW pixel. A frame memory is provided in the image signal converter.

R, G, B, and W pixels may be sequentially arranged in order in an odd row with B, W, R, and G pixels sequentially arranged in order in an even row.

The image signal converter includes an input gamma processing unit for processing linear RGB data input to gamma shaped non-linear data, a gamma mapping unit for extracting a white value from the non-linear data to convert the RGB data into the RGBW data, an initial scaler for executing an initial scale value on the RGBW data, the initial scale value fixed as a specific value, a sub pixel rendering unit for matching the input RGB data with the RGBW data to assign converted data value to corresponding RGBW pixels, an output gamma processing unit for performing inverse gamma calculations with respect to the gamma shaped non-linear data, a frame memory for storing the inverse gamma RGBW data, and a second scaler for performing scaling of these latter-data in accordance with a calculated current scale value corresponding to the data stored in the frame memory.

In some embodiments, a specific scale value fixed to an initial scale value by the initial scaler is a scale value of substantially 50%, which corresponds to an initial light level of a backlight identified as 100%.

Colors that deviate from color Gamut areas may be detected and the light level of the backlight determined with respect to the data converted from the gamma mapping unit of the image signal converter before the frame memory. An operation of a second scaler to which a calculated current scale value is applied is performed in a stage before the frame memory.

In some embodiments, the dynamic backlight controller includes a data testing unit for detecting the colors that deviate from the color Gamut areas in the RGBW data converted by the gamma mapping unit, a BL decision/smoothing unit for outputting a backlight level correct signal to control the color mapping and outputting the calculated current scale value corresponding to the correct signal when colors are mapped in the out of color Gamut areas, and a backlight controller for receiving the backlight level correct signal determined by the BL decision/smoothing unit to control the backlight unit to correspond to the backlight level correct signal. The scale value may be input to a scaler of the image signal converter.

In some embodiments, the present invention is directed to a method of driving an LCD driven by a CPU interface method. The method includes processing linear RGB data to generate gamma shaped non-linear data, extracting a white value from the non-linear data to convert the RGB data into converted RGBW data, setting an initial scale value to substantially 50% to perform data scaling in accordance with said initial scale value on the converted RGBW data, and setting a light level of a backlight corresponding to the initial scale value to an initial backlight level identified as 100%, assigning the initially scaled converted RGBW data values to corresponding RGBW pixels, performing inverse gamma calculations with respect to the gamma shaped non-linear data, performing data scaling in accordance with a real scale value corresponding to data stored in a frame memory for generating output RGBW data, and applying the output RGBW data to a liquid crystal panel through a data driver.

In some embodiments, the method further includes detecting out of gamut colors from the converted RGBW data, outputting the backlight level correct signal to control the color mapping and outputting the scale value corresponding to the correct signal when a color is mapped in the out of color area, and receiving the determined backlight level correct signal to control the light of the backlight emitted through a backlight unit to correspond to the correct signal.

According to a first aspect of the invention, there is provided a liquid crystal display (LCD) arranged to be driven by a CPU interface method as set out in claim 1. Preferred features are set out in claims 2 to 6.

According to a second aspect of the invention, there is provided a method of driving an LCD driven by a CPU interface method as set out in claim 7. Preferred features are set out in claim 8.

## BRIEF DESCRIPTION OF THE DRAWINGS

The accompanying drawings, together with the specification, illustrate exemplary embodiments of the present invention, and together with the description, serve to explain the principles of the present invention.

FIG. 1 is a block diagram illustrating the structure of an LCD;

FIG. 2 is a view illustrating the arrangement of the pixels included in FIG. 1;

FIG. 3 is a block diagram illustrating the structures of an exemplary image signal converter and dynamic backlight controller;

FIG. 4 is an RGBW vector mapping graph in a color vector space;

FIG. 5 is a block diagram illustrating the structure of an LCD according to some embodiments of the present invention;

FIG. 6 is a block diagram illustrating the structures of the image signal converter and the dynamic backlight controller of FIG. 5;

FIG. 7 is a view illustrating the position of a sub pixel when the sub pixel is rendered; and

FIG. 8 is a graph of comparing and mapping the data conversion results.

## DETAILED DESCRIPTION

Hereinafter, certain exemplary embodiments according to the present invention will be described with reference to the accompanying drawings. Here, when a first element is described as being coupled to a second element, the first element may be not only directly coupled to the second element but may also be indirectly coupled to the second element via a third element. Further, some of the elements that are not essential to the complete understanding of the invention are omitted for clarity. Also, like reference numerals refer to like elements throughout.

An interface method for driving a liquid crystal display (LCD) includes an RGB interface method (or a SYNC interface method) and a CPU interface method.

In the RGB interface method, image data is output in accordance with a frame and a line by timing controls performed by a vertical synchronizing signal VSYNC, a horizontal synchronizing signal HSYNC, and a clock signal. In the RGB interface method, input image data do not pass through an additional memory.

On the other hand, in the CPU interface method, image data is output by timing controls by a register select (RS) signal, a chip select (CS) signal, a write enable signal and a read enable signal. In the CPU interface method, the image data is output to the LCD via a memory (for example, a frame memory).

In addition, since the controller provided in the LCD may support only one of the RGB interface or the CPU interface methods, in description of the embodiments of the present invention, the embodiments driven by the RGB interface method are distinguished from the embodiments driven by the CPU interface method.

FIG. 1 is a block diagram illustrating the structure of an LCD. FIG. 2 is a view illustrating the arrangement of the pixels included in FIG. 1.

An LCD driven by the RGB interface method will be described as an example.

Referring to FIG. 1, the LCD includes a liquid crystal panel 300 and a gate driver 400, a data driver 500, a gray level voltage generator 800 coupled to the data driver 500, a backlight unit 900 providing light to the liquid crystal panel 300, a dynamic backlight controller (DBLC) 700 for controlling the backlight unit 900, a gray scale voltage generator 800, coupled to the data driver 500, for generating gray scale voltages, and a controller 600 for controlling the gate driver 400, the data driver 500, and the dynamic backlight controller 700.

The liquid crystal panel 300 includes a plurality of R, G, B, and W pixels provided between a plurality of scan lines G1 to Gn and data lines D1 to Dm arranged in a matrix. Each of the pixels includes a switching element Q coupled to the scan lines and the data lines and a liquid crystal capacitor Clc and a storage capacitor Cst coupled to the switching element. The storage capacitor Cst is optional and may be omitted if necessary.

The R, G, B, and W pixels become one unit pixel, and the R, G, B, and W pixels that constitute the unit pixel are sub pixels of the unit pixel.

The liquid crystal capacitor may use the pixel electrode provided on the lower substrate and the common electrode provided on the upper substrate as two terminals and the liquid crystal layer formed between the pixel electrode and the common electrode as a dielectric material. In addition, the pixel electrode is coupled to the switching element and the common electrode is formed on the front surface of the upper substrate to receive a common voltage Vcom.

However, the common electrode may be provided on the lower substrate. In this case, the pixel electrode and the common electrode that are linear or rod-shaped are arranged to cross each other.

In addition, each of the pixels includes R, G, and B color filters in a region corresponding to the pixel electrode to realize R, G, B, and W colors. A color filter is not provided in the W pixel. As illustrated in FIG. 2, the R, G, B, and W pixels are sequentially arranged in the mentioned order in an odd row and B, W, R, and G pixels are sequentially arranged in the mentioned order in an even row. Therefore, the R and B pixels are arranged to intersect each other in an odd column and the G and W pixels are arranged to intersect in an even column. Other than such an arrangement method, various other arrangements may be formed. The R, G, B, and W pixels may be arranged in rows and columns so that the same color pixel arrangements are not continuously repeated.

The gray scale voltage generator 800 generates a plurality of gray scale voltages related to the brightness of the LCD. The data driver 500 coupled to the data line of the liquid crystal panel 300 selects the gray scale voltage from the gray scale voltage generator 800 to apply the selected gray scale voltage to a data line as a data signal.

The gate driver 400 coupled to the scan line of the liquid crystal panel 300 applies a gate signal to the scan line.

The backlight unit 900 is provided on the surface corresponding to the lower substrate of the liquid crystal panel 300. A plurality of LEDs as light sources may be included in the backlight unit 900.

The dynamic backlight controller 700 for controlling the driving of the backlight unit 900 controls the amount of the light emitted from the backlight unit 900 to correspond to the data applied to the RGBW pixels to prevent the RGBW picture quality from being deteriorated in the original (pure) color data and to minimize the power consumption of the LCD.

The controller 600 includes an image signal converter 610. However, the image signal converter 610 may be realized by an additional device different from the controller 600 and may exist outside of the controller. The image signal converter 610 converts the RGB data input to the controller into RGBW data to provide the RGBW data to the panel.

The controller 600 receives image signals of three colors of R, G, and B and input control signals, for example, the vertical synchronizing signal VSYNC, the horizontal synchronizing signal HSYNC, a main clock MCLK, and a data enable signal DE a graphic controller (not shown) for controlling the display of the image signals. The signal controller 600 generates a gate control signal and a data control signal based on the input control signals, sends the gate control signal to the gate driver 400, and sends the data control signal to the data driver 500. In addition, the controller 600 applies the control signals to the dynamic backlight controller 700 to control the dynamic backlight controller 700.

That is, the LCD converts the RGB data into the RGBW data through the image signal converter 610 to provide the RGBW data to the panel. The dynamic backlight controller 700 controls the amount of the light emitted from the backlight unit 900 to correspond to the converted RGBW data to prevent the RGBW picture quality from being deteriorated in the pure color data and to minimize the power consumption of the LCD.

FIG. 3 is a block diagram illustrating the structures of an exemplary image signal converter and dynamic backlight controller. FIG. 4 is an RGBW vector mapping graph in a color vector space, which describes the amount (level) of the light of the backlight controlled.

Referring to FIG. 3, the image signal converter 610 includes an input gamma processor 612, a gamma mapping algorithm (hereinafter, GMA) unit 614, a scaler 616, a sub pixel rendering (SPR) unit 618, and an output gamma processing unit 619.

The input gamma processing unit 612 processes the linear R, G, and B data (for example, an 8 bit signal) input from the outside into gamma-shaped non-linear data so that the length of the 8 bit R, G, and B data increases to 11 bit R, G, and B data.

The operation of extracting a white (W) value from the 11 bit R, G, and B data is performed by the GMA unit 614. Conversion from the R, G, and B data into the R, G, B, and W data is performed by the gamma mapping algorithm formula provided by the GMA unit 614. When the R, G, and B data are changed into the R, G, B, and W data, the length of the 11 bit R, G, and B data increases by 1 bit. That is, the 11 bit R, G, and B data are converted into 12 bit R, G, B, and W data.

A detailed structure and operation of a GMA unit is disclosed in Korean Patent Publication Nos. 10-2009-0036513 and 10-2009-0040230, the entire contents of which are hereby expressly incorporated by reference.

The converted 12 bit R, G, B, and W data are provided to the DBLC 700 and the DBLC detects "out of color (Gamut) area" colors, as illustrated in FIG. 4.

When conversion of the RGB data into the RGBW data is generated, colors of specific high chroma may deviate in a color area, which is referred to as the output of "out of color (Gamut)". FIG. 4 is an RGBW vector mapping diagram in which white (W) is added to a common RGB vector mapping figure. Referring to FIG. 4, the above-described out of color (Gamut) region is illustrated.

The DBLC 700 includes a data survey unit 710, a BL decision/smoothing unit 720, and a backlight controller (PWM) 730. The data survey unit 710 detects the out of color (Gamut) area colors through the converted 12 bit R, G, B, and W data.

Since there is a white (W) color in the data, a displayable color brightness area may increase in comparison with the LCD consisting of the common R, G, and B pixels (for example, in the case of a high resolution panel no less than 250 ppi).

Therefore, the DBLC 700 outputs a backlight level correct signal when a color is mapped to the region excluding the region displayable in the current backlight light level considering a correlation between the current backlight light level and the color brightness area through the current color brightness mapping to control the color mapping. As a result, the DBLC 700 outputs a re-corrected backlight level correct signal and a scale value. This is performed by the BL decision/smoothing unit 720 of the DBLC 700.

The above is performed by applying a smoothing function that changes the light level of the backlight by a target value from the current value by determining the light level of a target backlight in accordance with the result of detecting colors that deviate from the color area and by minimizing visual artifacts.

In addition, the backlight level correct signal determined by the BL decision/smoothing unit 720 is transmitted to a backlight controller 730 to finally control the backlight unit 900 to correspond to the backlight light level control signal. The scale value is transmitted to the scaler 616 of the image signal converter 610.

When the scale value is calculated, the scaler 616 performs scaling so that the RGBW data value corresponds to the currently re-corrected backlight light value through the scale value.

The RGBW data value re-corrected by the scaler 616 is transmitted to the SPR unit 618 and the SRP unit 618 matches the data on the common RGB pixels arranged in a stripe to the data on the RGBW pixels illustrated in FIG. 2 to assign the properly converted data values to the RGBW pixels.

A detailed structure and operation of a SPR unit is disclosed in Korean Patent Publication Nos. 10-2009-0036513 and 10-2009-0040230, the entire contents of which are hereby expressly incorporated by reference.

Therefore, when the data values applied to the RGBW pixels are determined, the pixel data value (for example, 11 bit) output from the scaler 616 is converted into 10 bit data by the output gamma processing unit 619. The 10 bit data as a data signal dithered by 8 bit data and finally applied to the liquid crystal panel 300 is provided to the data driver 500.

The output gamma processing unit 619 may be realized by the inversion of the input gamma processing unit 612.

Therefore, as illustrated in FIG. 3, when the RGB image data are initially input, the RGB image data are converted into the RGBW data and the scale value and the value of the light level of the backlight are realized by the DBLC 700.

The DBLC 700 gradually changes the light level of the backlight by the smoothing unit so that human eyes may not recognize the change. The change is determined by the combination of the backlight light level value determined by the currently input image and the current backlight light level value as illustrated in EQUATION 1.

$$Bl = A*BL_t + B*BL_c \qquad \text{(EQUATION 1)}$$

where BL is the newly calculated light level of a backlight, BL_t is the light level of a target backlight to be determined, and BL_c is the currently set light level of a backlight.

The combination of such a value is applied based on the weight values of A and B. Therefore, the DBLC observes a change in the current image.

That is, according to the example of FIG. 1, the driving of an LCD driven by the RGB interface method does not change. However, in the case of the LCD driven by the CPU interface method in which a frame memory is to be provided, when the frame memory is positioned between the image signal converter and the data driver illustrated in FIG. 3, the input values of continuous images need to be determined due to the smoothing operation of the DBLC and continuous scale values and backlight light levels in accordance with the input values. However, in the CPU interface method, since the inputting of images is not continuously performed, the operation of the DBLC does not have to be performed smoothly.

That is, since the light level of the backlight of the DBLC is realized after completely receiving the data of one frame in the CPU interface method so that the image to which the complete dynamic backlight control (DBLC) is applied may be output in a second frame, it is difficult to achieve the desired picture quality and low power consumption in the CPU interface method through the structure of FIG. 3.

Therefore, in order to overcome the above difficulty, the frame memory may be positioned immediately before the image signal converter. In this case, the data in the frame memory is continuously read from the previous stage of the frame memory at no less than 60Hz, so that the DBLC may operate normally.

However, in this case, since it is not possible to obtain the effect of reducing a memory capacity (2/3 frame memory) that may be obtained by converting the RGB pixels into the RGBW pixels and that a full frame memory needs to be accessed and continuously processed, a clock faster than the 2/3 frame memory is needed and therefore the power consumption increases.

Therefore, in the LCD driven by the CPU interface method, a new structure for performing the operation of the DBLC while using only a 2/3 frame size is provided.

FIG. 5 is a block diagram illustrating the structure of an LCD, according to some embodiments of the present invention.

The LCD driven by the CPU interface method will be described as an example.

Referring to FIG. 5, an LCD according to some embodiments of the present invention includes a liquid crystal panel 300, a gate driver 400, a data driver 500, a gray scale voltage generator 800 coupled to the data driver 500, a backlight unit 900 for providing light to the liquid crystal panel 300, a dynamic backlight controller 200 for controlling the backlight unit, and a controller for controlling the gate driver 400, the data driver 500, and the dynamic backlight controller 200.

When this structure is compared with the example of the above-described RGB interface method, signals input to the controller are different, however, the other structures and operations are the same and thus detailed description thereof will be omitted.

The controller 600 includes an image signal converter 100. The image signal converter 100 may be realized by an additional device different from the controller 600 to exist outside the controller 600 and may convert the RGB data input to the controller into the RGBW data to provide the RGBW data to the panel.

The controller 600 is different from the example of FIG. 1 in receiving images of three colors of R, G, and B and a register select (RS) signal, a chip select (CS) signal, a write enable (WE) signal, and a read enable (RE) signal as input control signals for controlling the display of image data.

The RGB data are converted into the RGBW data through the image signal converter to be provided to the panel. The DBLC controls the amount of light emitted by the backlight unit to correspond to the converted RGBW data to prevent the RGBW picture quality from being deteriorated in the pure color data and to minimize the power consumption of the LCD.

Therefore, the image signal converter 100 is realized to have a different structure as that illustrated in FIG. 3, which will be described in detail with reference to FIG. 6.

FIG. 6 is a block diagram illustrating the structures of an exemplary image signal converter and an exemplary dynamic backlight controller. Referring to FIG. 6, the image signal converter 100 includes an input gamma processing unit 110, a gamma mapping algorithm (GMA) unit 120, an initial scaler 130, a sub pixel rendering (SPR) unit 140, an output gamma processing unit 150, a dithering unit 160, a frame memory (e.g., a RAM) 170, a real scaler 180, and a clamper 190.

As a 2/3 frame buffer, the frame memory 170 is coupled to the output of the dithering unit 160. The initial scaler 130 for executing the initial scale value as specific values are further provided in the image signal converter 100 illustrated in FIG. 6.

In some embodiments, the specific scale value fixed to the initial scale value by the initial scaler 130 is the scale value of 50% in which there is no deterioration of picture quality to correspond to the 100% of light level of the backlight.

That is, when the initial scale value is determined as 50% (0.5) and the light level of the backlight is determined as 100% to correspond to the value, the out of color (Gamut) area colors are not generated on all of the converted data.

Based on the data, the SPR unit 140, the output gamma processing unit 150, and the dithering unit 160 perform their operations, respectively.

The DBLC 200 receives the value output from the GMA unit 120 to determine the optimal backlight light level value with reference to the current frame value and to determine the light level of the backlight for the currently input data and the real scale value by applying a smoothing function using the optimal backlight light level value as a target.

Therefore, the initial frame is output using the data stored in the frame by applying the initial scale. The next frame is re-calculated as the value to which the real scale is applied in accordance with the light level of the backlight and the scale value that are optimal to the data stored in the current frame memory 170.

The out of color (Gamut) colors and the light level of the backlight with respect to the data converted by the GMA 120 of the image signal converter 100 are determined in a previous stage of the frame memory 170. The operation of the scaler 180 to which the real scale value is applied is also performed in the previous stage of the frame memory 170.

In this case, the real scale is applied considering the value converted into the initial scale value.

The real scale is performed by the scaler 180 and is calculated by the following EQUATION 2.

In order to develop the EQUATION 2, the equation of the finally output data on the specific pixel on which sub pixel rendering is performed by the scaler 180 and the SPR unit 140 after passing through the GMA unit 120 will be described as follows (Hereinafter, the value for the color R will be described as an example).

$$\begin{aligned}
R_scale1 &= R_gma1 * c \\
R_scale2 &= R_gma2 * c \\
R_scale3 &= R_gma3 * c \\
R_scale4 &= R_gma4 * c \\
R_scale5 &= R_gma5 * c
\end{aligned} \qquad \textbf{(EQUATION 2)}$$

$$\begin{aligned}
R_spr_c1 &= 0.125*R_scale2 + 0.125*R_scale3 + 0.125*R_scale5 + 0.125*R_scale4 + 0.5*R_scale1 - 0.125*c*L2 - 0.125*c*L3 - 0.125*c*L5 - 0.125*c*L4 + 0.5*c*L1 \\
&= c * (0.125*R_gma2 + 0.125*R_gma3 + 0.125*R_gma5 + 0.125*R_gma4 + 0.5*R_gma1 - 0.125*L2 - 0.125*L3 - 0.125*L5 - 0.125*L4 + 0.5*L1) \\
&= c * R_spr1
\end{aligned}$$

where, R_gma1 to R_gma5 illustrate results after the gamma mapping algorithm by the GMA unit of the red color is applied to the 5 sub pixels. The position of each of the sub pixel based on a common RGB stripe with respect to the R color is illustrated in FIG. 7. That is, FIG. 7 is a view illustrating the position of a sub pixel when the sub pixel is rendered. The numbering notation described in FIG. 7 corresponds to the EQUATION 2.

The variables in the EQUATION 2 are defined as follows:

c: value to be scaled,
R_gma: sub pixel data after gamma mapping algorithm by the GMA unit is applied,

R_scale: sub pixel data after being scaled,
R_spr_c: sub pixel rendering result with respect to scaled data,
L: value of calculating the luminance of the current pixel as R, G, B, and W by luminance data, and
R_spr: sub pixel rendering result on data that are not scaled

Referring to the EQUATION 2, when the sub pixel rendering result value with respect to the data that are not scaled is multiplexed by the scale value, the sub pixel rendering result on the scaled data is calculated.

In addition, the following EQUATIONS 3 and 4 illustrate the functions performed by the output gamma processing unit 150 and the dithering unit 160. The dithering unit 160 uses spatial dither due to the characteristic of the CPU interface, performs round up in the position where round-up is to be performed, and performs 2 bit truncate. The equations are developed taking into account the operation performed by the output gamma processing unit 150, that is, the case in which gamma 2.2 is set as a target in a function liquid crystal panel.

R_outgamma1 = R_spr_c1^(1/2.2) **(EQUATION 3)**

R_dither1 = R_outgamma1 / 4 **(EQUATION 4)**

Therefore, the final value of R_dither1 is displayed as R_sprl as illustrated in EQUATION 5.

R_dither1 = [(c * R_spr1)^(1/2.2)] / 4 **(EQUATION 5)**

In order to obtain the equation of the real-scale value input to the scaler 180 of FIG. 6, the development of the equation of R_dither1 in accordance with the operations of the elements illustrated in FIG. 6 is illustrated in EQUATION 6.

R_spr_c1 = 0.5 * R_spr1 **(EQUATION 6)**

where, the initial scale value is 0.5 and the scale value of 0.5 is calculated considering the above.

Since R-dither1 performs the same processes as the equations 3 and 4, calculation is performed by replacing the equation 6 as illustrated in the following EQUATION 7.

R_dither1 = [(0.5 * R_spr1)^(1/2.2)] / 4 **(EQUATION 7)**

The compensation value x, that is, the real scale value of FIG. 6 is obtained by the EQUATIONS 7 and 5 as illustrated in the following EQUATION 8 considering the EQUATION 7 so that the result of the equation 7 is the same as the result of the EQUATION 5.

x * {[(0.5 * R_spr1)^(1/2.2)] / 4} = [(c * R_spr1)^(1/2.2)] / 4

x = (2*c)^(1/2.2) **(EQUATION 8)**

Therefore, in FIG. 6, the scaler 180 multiplies the resultant value stored in the frame memory 170 by the resultant value of the EQUATION 8. At this time, the value c becomes the scale value calculated by the DBLC.

Actually, the scale value c calculated by the DBLC 200 is between 0.5 and 2 the calculation result of the value x considering the above is illustrated in the following TABLE 1.

**TABLE 1 Calculation of the value x in accordance with the scale value**

| C | 0.5 | 1 | 2 |
|---|---|---|---|
| 2*c | 1 | 2 | 4 |
| (2*c)^(1/2.2) | 1 | 1.370350985 | 1.877861821 |

As confirmed by the TABLE 1, since the initial scale value is previously applied as 0.5 when the scale value is 0.5, the value of x is 1 and the value of x increases as the scale value increases to 2. However, the degree of increase increases in proportion to the inverse output gamma value, that is, 1/2.2.

FIG. 8 is a graph for comparing and mapping the data conversion results according to the embodiments of the present invention.

The scale value c is data mapped assuming that the value c is 1.0. When the GMA value changes from 0 to 2047, the finally converted data are calculated.

Referring to FIG. 8, it is confirmed that almost the same result is calculated by the embodiments of FIG. 1 and FIG. 5. During the data conversion by the scaler 180 of FIG. 6, for the correctness of the calculating result of the output gamma of the EQUATION 8, the data substantially instantaneously read from the frame is converted from 8 bit data to 12 bit data, to perform calculation, and to convert the 12 bit data into 8 bit data.

The clamper illustrated in FIG. 6 for performing clamping may be processed the same as that in the conventional art. In the case of the value to be clamped, that is, the pixel in which out of color (Gamut) data are generated, the resultant value is normalized so that the pixel is entirely in color (gamut).

A detailed structure and operation of a clamper is disclosed by the Korean Patent Publication Nos. 10-2009-0036513 and 10-2009-0040230.

While the present invention has been described in connection with certain exemplary embodiments, it is to be understood that the invention is not limited to the disclosed embodiments, but, on the contrary, is intended to cover various modifications and equivalent arrangements included within the scope of the appended claims.

## Claims

**1.** A liquid crystal display (LCD) arranged to be driven by a CPU interface method, comprising:

a liquid crystal panel (300) including a plurality of R, G, B, and W pixels located between a plurality of scan lines and data lines, arranged in a matrix;
a backlight unit (900) for radiating light onto the liquid crystal panel (300);
a data driver (500) for applying data signals to the plurality of data lines;
an image signal converter (100) for converting RGB data input into output RGBW data and providing the output RGBW data to the data driver (500); and
a dynamic backlight controller (200) for controlling an amount of light emitted from the backlight unit (900) to correspond to data applied to the RGBW pixel,
wherein the image signal converter (100) comprises:

an input gamma processing unit (110) for processing linear RGB data input to gamma shaped non-linear data;
a gamma mapping unit (120) for extracting a white value from the gamma shaped non-linear data to convert the RGB data into converted RGBW data;
an initial scaler (130) for executing data scaling in accordance with an initial scale value on the converted RGBW data;
a sub pixel rendering unit (140) for assigning the initially scaled converted RGBW data values to corresponding RGBW pixels;
an output gamma processing unit (150) for performing inverse gamma calculation with respect to the gamma shaped non-linear data to produce inverse gamma RGBW data from the RGBW data values assigned to the RGBW pixels;
a frame memory (170) arranged to store the inverse gamma RGBW data;

a second scaler (180) for performing data scaling on the inverse gamma RGBW data stored in the frame memory (170) in accordance with a calculated current scale value for generating the output of RGBW data.

**2.** A liquid crystal display according to claim 1, wherein the pixels are arranged in odd and even columns, wherein the R and B pixels alternate in an odd column and the G and W pixels alternate in an even column, while being arranged in repeated RGB sequences in odd rows and in repeated BWRG sequences in even rows.

**3.** A liquid crystal display according to claim 1 or 2, wherein the initial scale value used by the initial scaler (130) is a scale value of 50% corresponding to an initial light level of a backlight identified as 100%.

**4.** A liquid crystal display according to any one of claims 1 to 3, wherein colors deviating from the color Gamut areas are detected and the light level of the backlight is determined with respect to the data converted from the gamma mapping unit (120) before the frame memory (170), and wherein an operation of the second scaler (180) to which a calculated current scale value is applied is performed after the frame memory (170).

**5.** A liquid crystal display according to any one of claims 1 to 4, wherein the dynamic backlight controller comprises:

a data testing unit for detecting colors deviating from the color Gamut areas in the RGBW data;
a BL decision/smoothing unit (220) for outputting a backlight level correct signal to control the color mapping and outputting the calculated current scale value corresponding to the backlight level correct signal when colors are mapped in the out of color Gamut areas; and
a backlight controller for receiving the backlight level correct signal determined by the BL decision/smoothing unit to control the backlight unit to correspond to the backlight level correct signal.

**6.** A liquid crystal display according to claim 5, wherein the scale value is input to a scaler (180) of the image signal converter.

**7.** A method of driving a liquid crystal display driven by a CPU interface method, comprising:

processing linear RGB data input to generate gamma shaped non-linear data;
extracting a white value from the non-linear data to convert the RGB data into converted RGBW data;
setting an initial scale value to substantially 50% to perform data scaling in accordance with said initial scale value on the converted RGBW data, and setting a light level of a backlight corresponding to the initial scale value to an initial backlight level identified as 100%;
assigning the initially scaled converted RGBW data values to respective RGBW pixels;
performing inverse gamma calculations with respect to the gamma shaped non-linear data to produce inverse gamma RGBW data from the RGBW data assigned to the pixels;
storing the inverse gamma RGBW data in a frame memory (170);
performing data scaling on the inverse gamma RGBW data stored in the frame memory (170) in accordance with a calculated current scale value for generating output RGBW data; and
applying the output RGBW data to a liquid crystal panel (300) through a data driver (500).

**8.** A method of driving a liquid crystal display according to claim 7, further comprising:

detecting out of gamut colors from the converted RGBW data;
outputting a backlight level correct signal to control the color mapping and outputting the scale value corresponding to the backlight level correct signal when a color is mapped in the out of color area; and
receiving the determined backlight level correct signal to control the light level of the backlight emitted by a backlight unit to correspond to the backlight level correct signal.

## Patentansprüche

**1.** Flüssigkristallanzeige (LCD), dafür eingerichtet, durch ein CPU-Schnittstellenverfahren angesteuert zu werden, umfassend:

einen Flüssigkristallbildschirm (300), der eine Vielzahl von R-, G-, B- und W-Bildpunkten aufweist, die sich zwischen einer Vielzahl von in einer Matrix angeordneten Rasterleitungen und Datenleitungen befinden;
eine Hintergrundbeleuchtungseinheit (900) zum Ausstrahlen von Licht auf den Flüssigkristallbildschirm (300);
einen Datentreiber (500) zum Anlegen von Datensignalen an die Vielzahl von Datenleitungen;
einen Bildsignalkonverter (100) zum Konvertieren einer RGB-Dateneingabe in Ausgabe-RGBW-Daten und Übergeben der Ausgabe-RGBW-Daten an den Datentreiber (500); und
eine dynamische Hintergrundbeleuchtungssteuerungseinrichtung (200) zum Steuern einer von der Hintergrundbeleuchtungseinheit (900) emittierten Lichtmenge, um an den RGBW-Bildpunkt angelegten Daten zu entsprechen,
worin der Bildsignalkonverter (100) umfasst:

eine Eingangs-Gammaverarbeitungseinheit (110) zum Verarbeiten von linearen RGB-Dateneingaben zu gammaförmigen nichtlinearen Daten;
eine Gamma-Zuordnungseinheit (120) zum Extrahieren eines Weißwerts aus den gammaförmigen nichtlinearen Daten, um die RGB-Daten in konvertierte RGBW-Daten zu konvertieren;
einen Anfangsskalierer (130) zum Ausführen einer Datenskalierung an den konvertierten RGBW-Daten gemäß einem Anfangsskalierungswert;
eine Teilbildpunktwiedergabeeinheit (140) zum Zuweisen der anfänglich skalierten konvertierten RGBW-Datenwerte zu entsprechenden RGBW-Bildpunkten;
eine Ausgangs-Gammaverarbeitungseinheit (150) zum Durchführen einer inversen Gammaberechnung mit Bezug auf die gammaförmigen nichtlinearen Daten, um aus den RGBW-Datenwerten, die den RGBW-Bildpunkten zugewiesen sind, inverse Gamma-RGBW-Daten zu erzeugen;
einen Bildspeicher (170), der dafür eingerichtet ist, die inversen Gamma-RGBW-Daten zu speichern;
einen zweiten Skalierer (180) zum Durchführen einer Datenskalierung an den im Bildspeicher (170) gespeicherten inversen Gamma-RGBW-Daten gemäß einem berechneten aktuellen Skalierungswert zum Erzeugen der Ausgabe von RGBW-Daten.

**2.** Flüssigkristallanzeige nach Anspruch 1,
worin die Bildpunkte in geraden und ungeraden Spalten angeordnet sind, worin die R- und B-Bildpunkte sich in einer ungeraden Spalte abwechseln und die G- und W-Bildpunkte sich in einer geraden Spalte abwechseln, während sie in ungeraden Zeilen in wiederholten RGB-Folgen und in geraden Zeilen in wiederholten BWRG-Folgen angeordnet sind.

**3.** Flüssigkristallanzeige nach Anspruch 1 oder 2, worin der durch den Anfangsskalierer (130) verwendete Anfangsskalierungswert ein Skalierungswert von 50% entsprechend einem mit 100% angegebenen Anfangslichtpegel einer Hintergrundbeleuchtung ist.

**4.** Flüssigkristallanzeige nach einem der Ansprüche 1 bis 3,
worin von den Farbpalettenbereichen abweichende Farben ermittelt werden und der Lichtpegel der Hintergrundbeleuchtung bestimmt wird, und zwar mit Bezug auf die konvertierten Daten von der Gamma-Zuordnungseinheit (120) vor dem Bildspeicher (170), und
worin eine Operation des zweiten Skalierers (180), auf die ein berechneter aktueller Skalierungswert angewendet wird, nach dem Bildspeicher (170) durchgeführt wird.

**5.** Flüssigkristallanzeige nach einem der Ansprüche 1 bis 4, worin die dynamische Hintergrundbeleuchtungssteuerungseinrichtung umfasst:

eine Datenprüfeinheit zum Ermitteln von Farben, die von den Farbpalettenbereichen abweichen, in den RGBW-Daten;
eine Hintergrundbeleuchtungsentscheidungs-/glättungseinheit (220) zum Ausgeben eines Hintergrundbeleuchtungspegel-Korrektursignals, um die Farbzuordnung zu steuern, und Ausgeben des berechneten aktuellen Skalierungswerts, der dem Hintergrundbeleuchtungspegel-Korrektursignal entspricht, wenn Farben in die Bereiche außerhalb der Farbpalette zugeordnet werden; und
eine Hintergrundbeleuchtungssteuerungseinrichtung zum Empfangen des durch die Hintergrundbeleuchtungsentscheidungs-/glättungseinheit bestimmten Hintergrundbeleuchtungspegel-Korrektursignals, um die Hintergrundbeleuchtungseinheit so zu steuern, dass sie dem Hintergrundbeleuchtungspegel-Korrektursignal entspricht.

6. Flüssigkristallanzeige nach Anspruch 5, worin der Skalierungswert in einen Skalierer (180) des Bildsignalkonverters eingegeben wird.

7. Verfahren zum Ansteuern einer durch ein CPU-Schnittstellenverfahren angesteuerten Flüssigkristallanzeige, umfassend:

Verarbeiten einer linearen RGB-Dateneingabe, um gammaförmige nichtlineare Daten zu erzeugen;
Extrahieren eines Weißwerts aus den nichtlinearen Daten, um die RGB-Daten in konvertierte RGBW-Daten zu konvertieren;
Setzen eines Anfangsskalierungswerts auf im Wesentlichen 50%, um eine Datenskalierung an den konvertierten RGBW-Daten gemäß dem Anfangsskalierungswert durchzuführen, und Setzen eines Lichtpegels einer Hintergrundbeleuchtung, der dem Anfangsskalierungswert entspricht, auf einen mit 100% angegebenen Anfangshintergrundbeleuchtungspegel;
Zuweisen der anfänglich skalierten konvertierten RGBW-Datenwerte zu entsprechenden RGBW-Bildpunkten;
Durchführen inverser Gammaberechnungen mit Bezug auf die gammaförmigen nichtlinearen Daten, um aus den RGBW-Daten, die den Bildpunkten zugewiesen wurden, inverse Gamma-RGBW-Daten zu erzeugen;
Speichern der inversen Gamma-RGBW-Daten in einem Bildspeicher (170);
Durchführen einer Datenskalierung an den im Bildspeicher (170) gespeicherten inversen Gamma-RGBW-Daten gemäß einem berechneten aktuellen Skalierungswert zum Erzeugen von Ausgabe-RGBW-Daten; und
Anlegen der Ausgabe-RGBW-Daten an einen Flüssigkristallbildschirm (300) über einen Datentreiber (500).

8. Verfahren zum Ansteuern einer Flüssigkristallanzeige nach Anspruch 7, ferner umfassend:

Ermitteln von Farben außerhalb der Palette aus den konvertierten RGBW-Daten;
Ausgeben eines Hintergrundbeleuchtungspegel-Korrektursignals, um die Farbzuordnung zu steuern, und Ausgeben des Skalierungswerts, der dem Hintergrundbeleuchtungspegel-Korrektursignal entspricht, wenn eine Farbe in den Bereich außerhalb der Farbpalette zugeordnet wird; und
Empfangen des bestimmten Hintergrundbeleuchtungspegel-Korrektursignals, um den Lichtpegel des durch eine Hintergrundbeleuchtungseinheit emittierten Hintergrundlichts so zu steuern, dass er dem Hintergrundbeleuchtungspegel-Korrektursignal entspricht.

## Revendications

1. Écran d'affichage à cristaux liquides (LCD) agencé de manière à être commandé par un procédé d'interface d'unité CPU, comprenant :

un panneau d'affichage à cristaux liquides (300) incluant une pluralité de pixels R, G, B, et W situés entre une pluralité de lignes de balayage et de lignes de données, agencées dans une matrice ;
une unité de rétroéclairage (900) destinée à rayonner de la lumière sur le panneau d'affichage à cristaux liquides (300) ;
un pilote de données (500) destiné à appliquer des signaux de données à la pluralité de lignes de données ;
un convertisseur de signal d'image (100) destiné à convertir une entrée de données RGB en des données RGBW de sortie, et à fournir les données RGBW de sortie au pilote de données (500) ; et
un contrôleur de rétroéclairage dynamique (200) destiné à commander une quantité de lumière émise par l'unité de rétroéclairage (900), afin qu'elle corresponde à des données appliquées au pixel RGBW ;
dans lequel le convertisseur de signal d'image (100) comprend :

une unité de traitement de gamma d'entrée (110) destinée à traiter des données RGB linéaires introduites dans des données non linéaires en forme de gamma ;
une unité de mise en correspondance de gammas (120) destinée à extraire une valeur de blanc des données non linéaires en forme de gamma, en vue de convertir les données RGB en données RGBW converties ;
un module de mise à l'échelle initial (130) destiné à exécuter une mise à l'échelle de données selon une valeur d'échelle initiale sur les données RGBW converties ;
une unité de rendu de sous-pixels (140) destinée à affecter les valeurs de données RGBW converties initialement mises à l'échelle à des pixels RGBW correspondants ;
une unité de traitement de gamma de sortie (150) destinée à mettre en oeuvre un calcul de gamma inverse relativement aux données non linéaires en forme de gamma, en vue de produire des données RGBW de gamma inverse à partir des valeurs de données RGBW affectées aux pixels RGBW ;
une mémoire de trames (170) agencée de manière à stocker les données RGBW de gamma inverse ;
un second module de mise à l'échelle (180) destiné à mettre en oeuvre une mise à l'échelle de données sur les données RGBW de gamma inverse stockées dans la mémoire de trames (170) selon une valeur d'échelle en cours calculée, en vue de générer la sortie de données RGBW.

**2.** Écran d'affichage à cristaux liquides selon la revendication 1,
dans lequel les pixels sont agencés en colonnes impaires et paires, dans lequel les pixels R et B sont alternés dans une colonne impaire et les pixels G et W sont alternés dans une colonne paire, tout en étant agencés en séquences RGB répétées dans des rangées impaires et en séquences BWRG répétées dans des rangées paires.

**3.** Écran d'affichage à cristaux liquides selon la revendication 1 ou 2, dans lequel la valeur d'échelle initiale utilisée par le module de mise à l'échelle initial (130) est une valeur d'échelle de 50 % correspondant à un niveau de lumière initial d'un rétroéclairage identifié comme étant de 100 %.

**4.** Écran d'affichage à cristaux liquides selon l'une quelconque des revendications 1 à 3,
dans lequel les couleurs qui diffèrent des zones de gammes de couleurs sont détectées et le niveau de lumière du rétroéclairage est déterminé relativement aux données converties à partir de l'unité de mise en correspondance de gammas (120) avant la mémoire de trames (170) ; et
dans lequel une opération du second module de mise à l'échelle (180), auquel est appliquée une valeur d'échelle en cours calculée, est mise en oeuvre après la mémoire de trames (170).

**5.** Écran d'affichage à cristaux liquides selon l'une quelconque des revendications 1 à 4, dans lequel le contrôleur de rétroéclairage dynamique comprend:

une unité de test de données destinée à détecter des couleurs divergeant des zones de gammes de couleurs dans les données RGBW ;
une unité de lissage / prise de décision de rétroéclairage BL (220) destinée à générer en sortie un signal de correction de niveau de rétroéclairage, en vue de commander la mise en concordance de couleurs, et à générer en sortie la valeur d'échelle en cours calculée correspondant au signal de correction de niveau de rétroéclairage, lorsque les couleurs sont mises en concordance dans les zones hors des gammes de couleurs ; et
un contrôleur de rétroéclairage destiné à recevoir le signal de correction de niveau de rétroéclairage déterminé par l'unité de lissage / prise de décision de rétroéclairage BL, en vue de commander l'unité de rétroéclairage afin qu'elle corresponde au signal de correction de niveau de rétroéclairage.

**6.** Écran d'affichage à cristaux liquides selon la revendication 5, dans lequel la valeur d'échelle est introduite dans un module de mise à l'échelle (180) du convertisseur de signal d'image.

**7.** Procédé de commande d'un écran d'affichage à cristaux liquides commandé par un procédé d'interface d'unité CPU, consistant à :

traiter une entrée de données RGB linéaires en vue de générer des données non linéaires en forme de gamma ;
extraire une valeur de blanc des données non linéaires en vue de convertir les données RGB en des données RGBW converties ;
définir une valeur d'échelle initiale sur sensiblement 50 % en vue de mettre en oeuvre une mise à l'échelle de données selon ladite valeur d'échelle initiale sur les données RGBW converties, et définir un niveau de lumière d'un rétroéclairage correspondant à la valeur d'échelle initiale, sur un niveau de rétroéclairage initial identifié comme étant de 100%;
affecter les valeurs de données RGBW converties initialement mises à l'échelle à des pixels RGBW respectifs ;
mettre en oeuvre des calculs de gammas inverses relativement aux données non linéaires en forme de gamma, en vue de produire des données RGBW de gamma inverse à partir des données RGBW affectées aux pixels ;
stocker les données RGBW de gamma inverse dans une mémoire de trames (170) ;
mettre en oeuvre une mise à l'échelle de données sur les données RGBW de gamma inverse stockées dans la mémoire de trames (170) selon une valeur d'échelle en cours calculée, en vue de générer des données RGBW de sortie ; et
appliquer les données RGBW de sortie à un panneau d'affichage à cristaux liquides (300) à travers un pilote de données (500).

**8.** Procédé de commande d'un écran d'affichage à cristaux liquides selon la revendication 7, consistant en outre à :

détecter des couleurs hors gamme à partir des données RGBW converties ;
générer en sortie un signal de correction de niveau de rétroéclairage, en vue de commander la mise en concordance de couleurs, et générer en sortie la valeur d'échelle correspondant au signal de correction de niveau de rétroéclairage lorsqu'une couleur est mise en correspondance dans la zone hors gamme de couleurs ; et
recevoir le signal de correction de niveau de rétroéclairage déterminé, en vue de commander le niveau de lumière du rétroéclairage émis par une unité de rétroéclairage afin qu'il corresponde au signal de correction de niveau de rétroéclairage.

FIG. 1

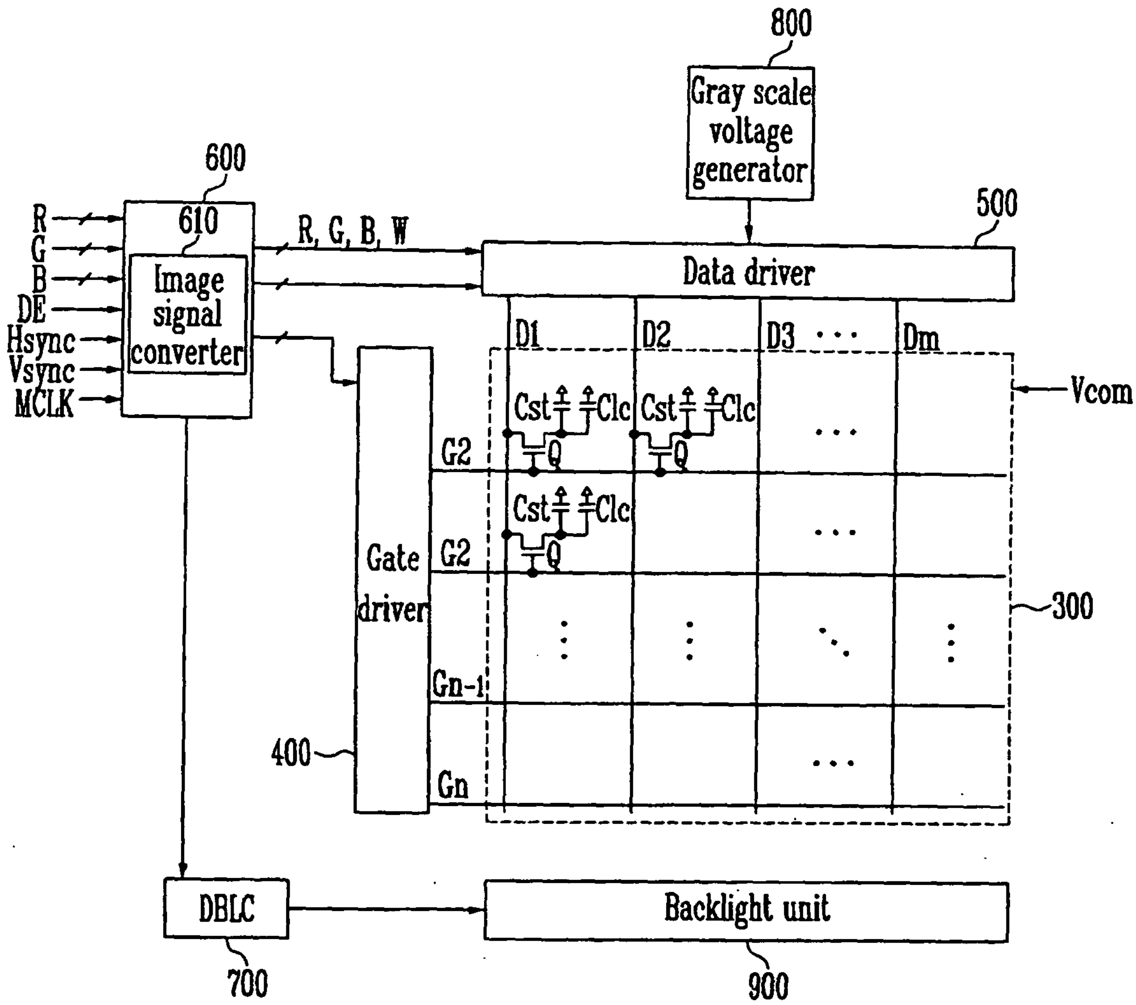
800
Gray scale voltage generator
600
610
Image signal converter
R
G
B
DE
Hsync
Vsync
MCLK
R, G, B, W
500
Data driver
D1
D2
D3
Dm
Vcom
Cst
Clc
Q
G2
G2
Gn-1
Gn
Gate driver
400
300
DBLC
700
Backlight unit
900

FIG. 2

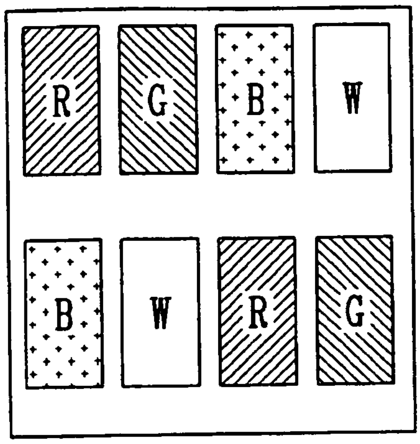
R
G
B
W
B
W
R
G

FIG. 3

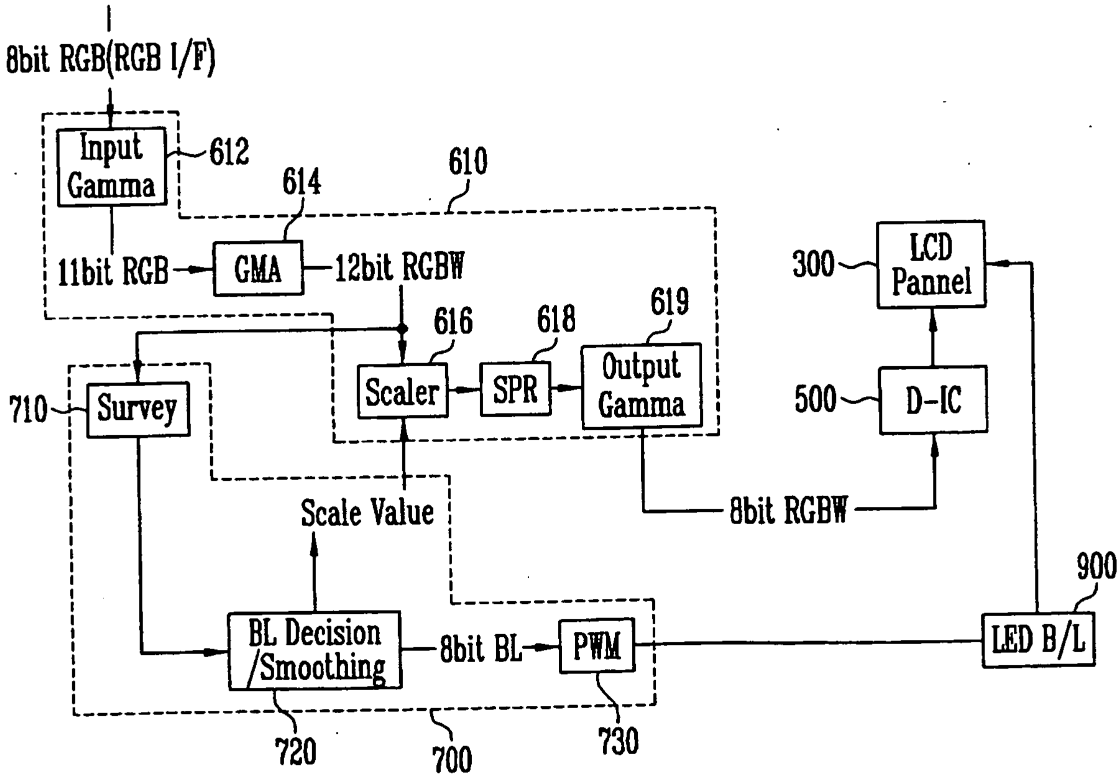
8bit RGB(RGB I/F)
Input Gamma
612
614
610
11bit RGB
GMA
12bit RGBW
616
618
619
Scaler
SPR
Output Gamma
710
Survey
Scale Value
BL Decision /Smoothing
8bit BL
PWM
720
700
730
300
LCD Pannel
500
D-IC
8bit RGBW
900
LED B/L

FIG. 4

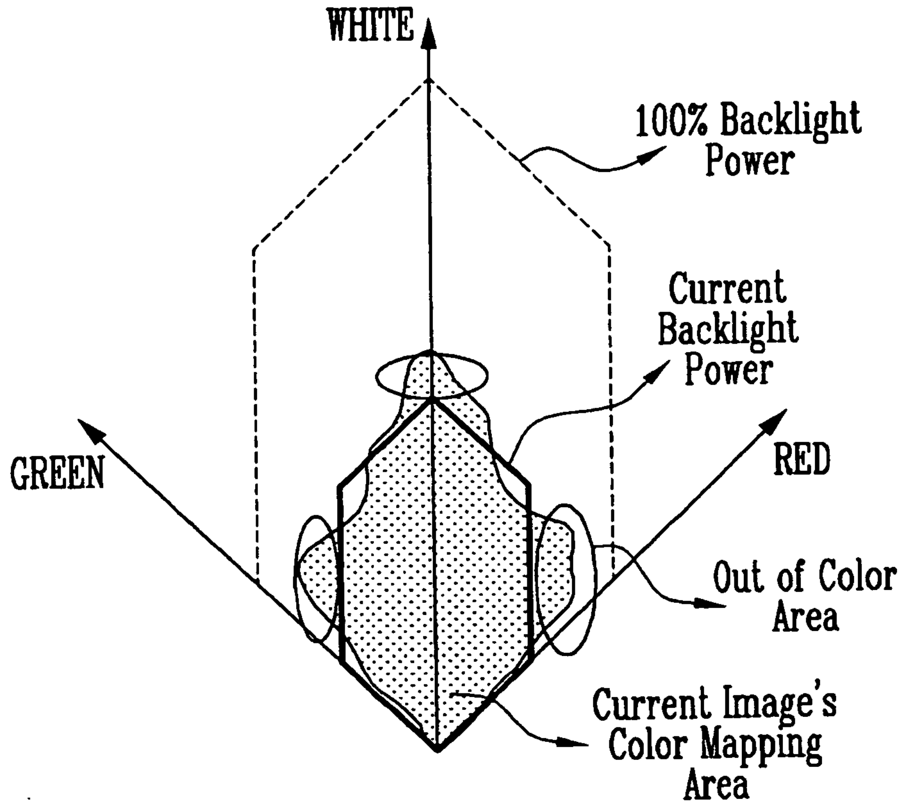
WHITE
100% Backlight Power
Current Backlight Power
GREEN
RED
Out of Color Area
Current Image's Color Mapping Area

FIG. 5

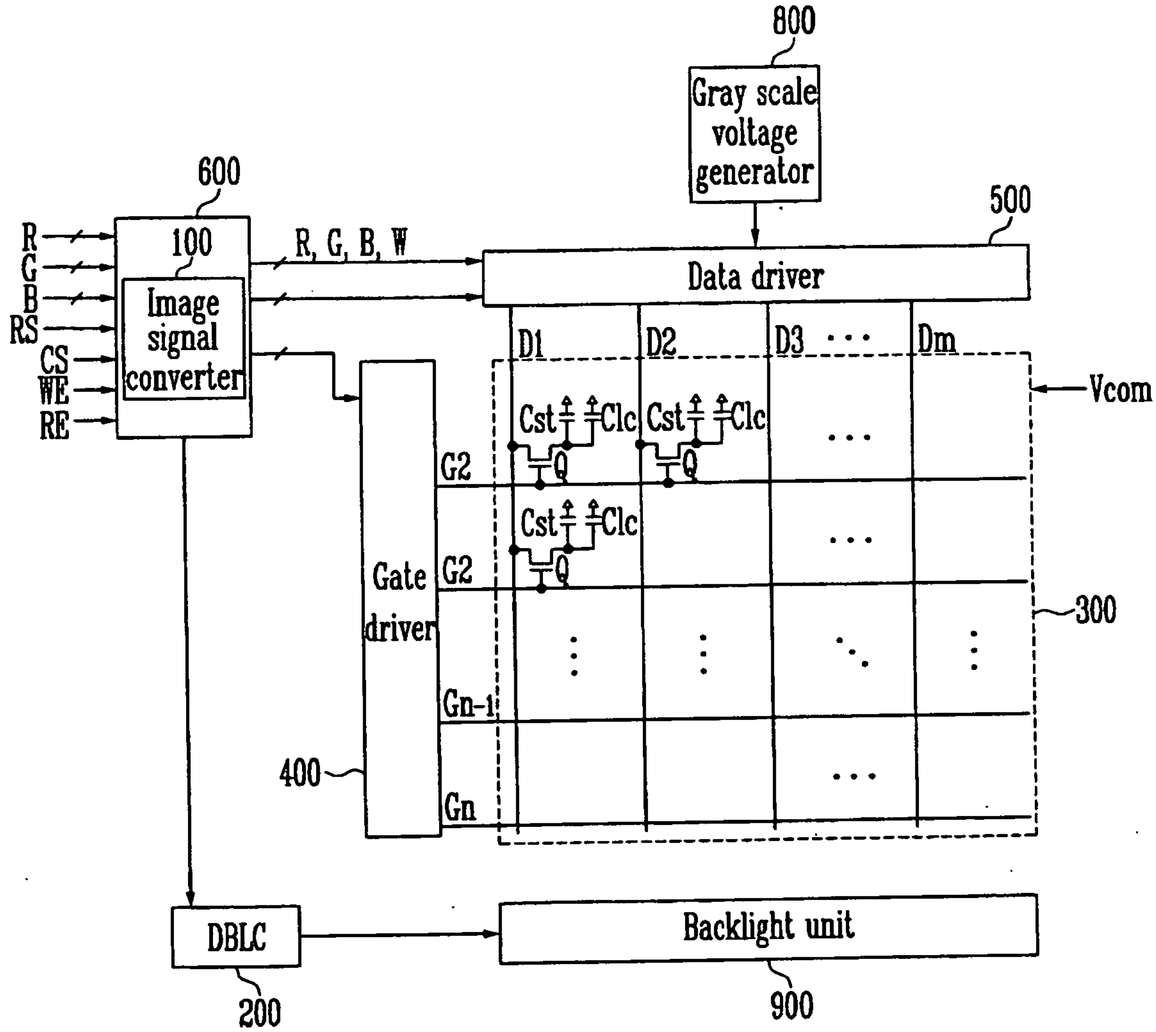
800
Gray scale voltage generator
600
100
Image signal converter
R
G
B
RS
CS
WE
RE
R, G, B, W
500
Data driver
D1
D2
D3
Dm
Vcom
Cst
Clc
Q
G2
G2
Gn-1
Gn
Gate driver
400
300
DBLC
200
Backlight unit
900

FIG. 6

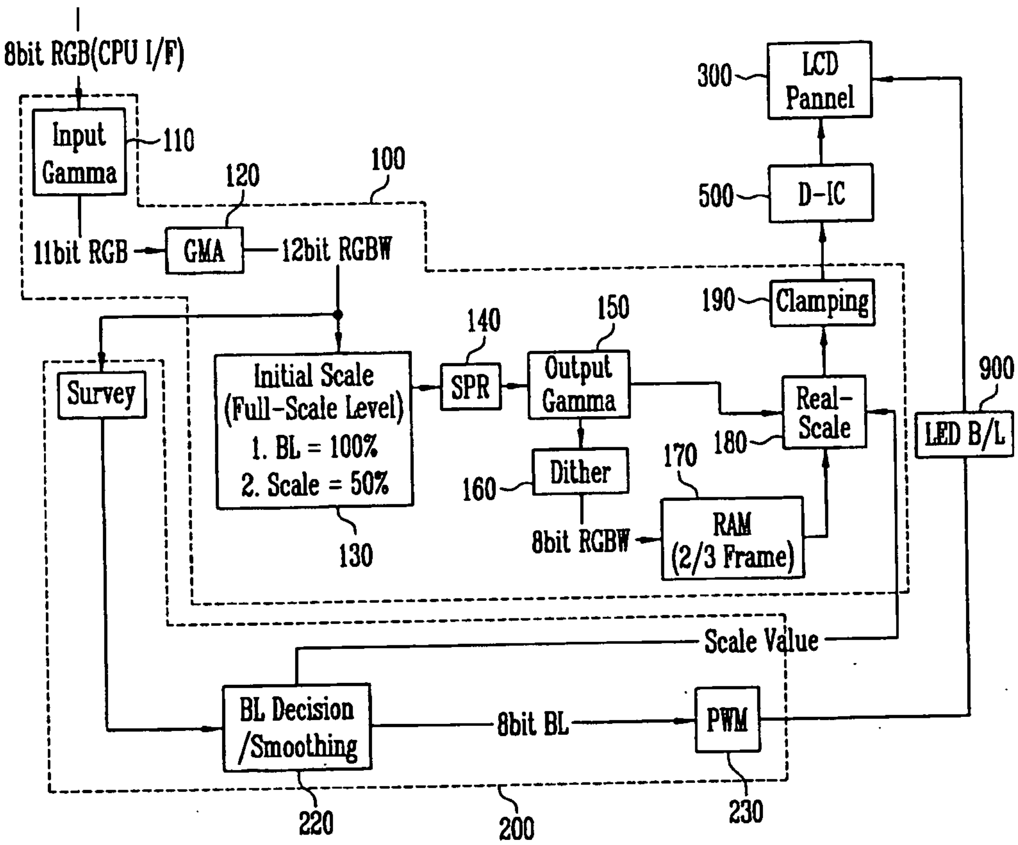
8bit RGB(CPU I/F)
Input Gamma
110
120
100
11bit RGB
GMA
12bit RGBW
Survey
Initial Scale (Full-Scale Level)
1. BL = 100%
2. Scale = 50%
130
140
SPR
150
Output Gamma
Dither
160
8bit RGBW
170
RAM (2/3 Frame)
180
Real-Scale
190
Clamping
500
D-IC
300
LCD Pannel
900
LED B/L
Scale Value
BL Decision /Smoothing
8bit BL
PWM
220
200
230

FIG. 7

| | | |
|---|---|---|
| | Rgma2 | |
| Rgma3 | Rgma1 | Rgma5 |
| | Rgma4 | |

FIG. 8

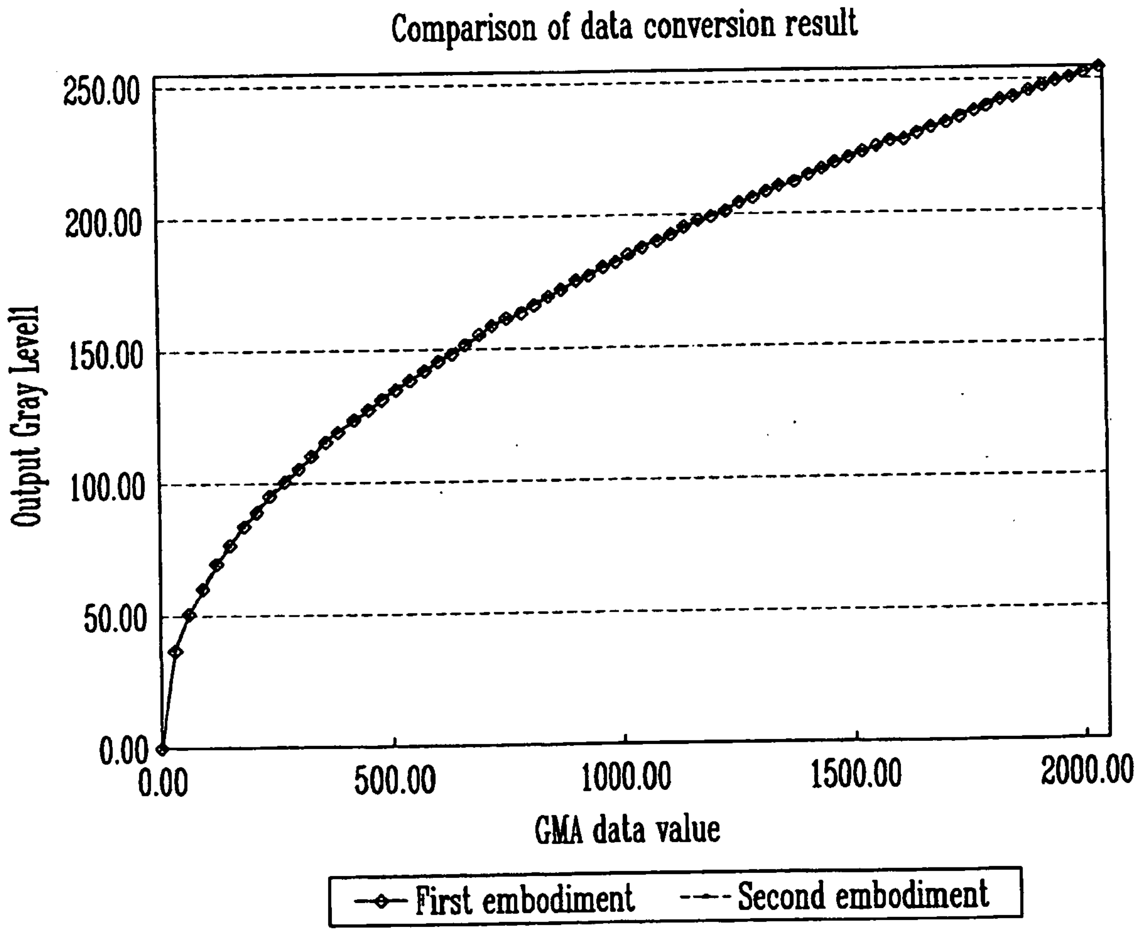

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2007279372 A
- US 2006255686 A
- US 2009207120 A
- KR 1020090036513
- KR 1020090040230